# EUROPÄISCHE PATENTSCHRIFT

(11) **EP 2 796 270 B1**
(45) Veröffentlichungstag und Bekanntmachung des Hinweises auf die Patenterteilung: **01.11.2017**
(21) Anmeldenummer: 14172519.2
(22) Anmeldetag: 18.08.2006
(51) Int. Cl.: B29C 49/42, G05B 19/00, B29C 49/06, B29C 49/36, B29C 49/78

(54) **Verfahren und Vorrichtung zum Rückführen von Blasluft aus dem fertigen geblasenen Behälter zwischen zwei Kompressorstufen**
Method and apparatus for feeding back of blowing air from the finished blow-molded container between two compressor stages
Procédé et dispositif pour renvoyer l'air de soufflage d'un récipient moulé par soufflage entre deux étages de compresseur

(30) Priorität: 08.09.2005 DE 102005042926
(43) Veröffentlichungstag der Anmeldung: 29.10.2014
(62) Teilanmeldung aus: 06776949.7
(73) Patentinhaber: Krones AG, 93073 Neutraubling (DE)
(72) Erfinder: Voth, Klaus, 93073 Neutraubling (DE); Geltinger, Florian, 93073 Neutraubling (DE); Blochmann, Erik, 93073 Neutraubling (DE); Schmid, Florian, 93073 Neutraubling (DE); Brunner, Andreas, 93073 Neutraubling (DE)
(74) Vertreter: Grünecker Patent- und Rechtsanwälte PartG mbB

(56) Entgegenhaltungen:
- EP-A2- 1 306 195
- DE-A1- 10 246 564
- DE-C2- 3 991 547
- JP-A- 2002 317 770
- US-A1- 2003 183 966
- US-A1- 2004 173 949

## Beschreibung

Die Erfindung betrifft ein Verfahren zur Steuerung und Regelung einer Hohlkörperherstellungseinheit gemäß dem Oberbegriff des Anspruchs 6 und eine Vorrichtung zum Herstellen von Hohlkörpern nach dem Oberbegriff von Anspruch 1.

Solche Hohlkörperherstellungseinheiten werden in verschiedenen Industriezweigen eingesetzt, so z. B. in der Glas- bzw. in der Kunststoffindustrie. In der Glasindustrie werden damit z. B. Glasflaschen hergestellt. In der Kunststoffindustrie finden solche Einheiten Verwendung in der Herstellung von Hohlkörpern, insbesondere von Behältern wie z. B. Flaschen. Vorher erwärmte Flaschenrohlinge werden in Formen gegeben, wo sie mit Druckluft beaufschlagt werden und dadurch ihre endgültige Gestalt erhalten. Diese Maschinen weisen immer Steuereinrichtungen und manchmal auch Regeleinrichtungen auf, um eine möglichst optimale Behälterqualität bei möglichst hohen Ausstoßraten zu gewährleisten.

Gemäß dem Stand der Technik sind Hohlkörperherstellungseinheiten mit Steuereinheiten bekannt, wobei die Steuereinheit nur für die Steuerung der Hohlkörperherstellungsmaschine zuständig ist. Die Kompressoren, die die Druckluft zur Herstellung der Hohlkörper bereitstellen, laufen mit konstanter Leistung, wobei es unerheblich ist, ob ein Behälter mit einem Maximaldruck (z. B. 40 bar) oder mit einem geringeren Druck (z. B. 32 bar) hergestellt werden soll. Die Druckregelung findet nicht über den Kompressor, sondern über die Druckreduktion in der Hohlkörperherstellungsmaschine statt.

Weiterhin sind aus dem Stand der Technik Hohlkörperherstellungseinheiten bekannt, bei denen sowohl die Hohlkörperherstellungsmamaschine als auch der Kompressor jeweils eine eigene Steuereinheit besitzen. Wird die Behälterproduktion in der Hohlkörperherstellungsmaschine umgestellt, so wird die Steuereinheit dieser und die Steuereinheit des Kompressors getrennt voneinander umgestellt.

Ein Problem bei diesen Vorrichtungen ist es, dass der Arbeitsaufwand bei Produktionsumstellungen sehr hoch ist, da mehrere Steuereinrichtungen betätigt werden müssen. Es ist vor allem dann ein Problem, wenn mehrere Behälterherstellungsmaschinen und mehrere Kompressoren vorhanden sind, die parallel umgestellt werden müssen. Dies kann z.B. dann der Fall sein, wenn an eine Behälterherstellungsmaschine mehrere Kompressoren angeschlossen sind, wenn ein Kompressor mehrere Behälterherstellungsmaschinen oder wenn ein Block mehrerer Kompressoren einen Block mit mehreren Behälterherstellungsmaschinen versorgt.

Aus der US 2004/0173949 A1 ist eine Streckblasmaschine bekannt, bei der Blasluft aus den geblasenen Behältern in einen Rückgewinnungstank zurückgeführt und von dort wahlweise wieder in die Blasmaschine für das Vorblasen der Behälter oder in eine zentrale Druckluftversorgung eingespeist wird.

Aus der DE 39 91 547 C2 ist ferner eine stationäre Spritzgießmaschine zur Herstellung von Hohlkörpern bekannt, bei der aus den ausgeformten Hohlkörpern ausströmendes Druckgas über einen Rückgewinnungsbehälter dem Eingang eines mehrstufigen Verdichters zugeführt wird. Hierbei handelt es sich um einen vergleichsweise langsamen Prozess zur Herstellung jeweils eines einzelnen Hohlkörpers, wobei das eingesetzte Druckgas möglichst vollständig zurückgewonnen werden soll. Folglich wird das Druckgas auf ein möglichst niedriges Druckniveau entspannt und ausschließlich der ersten Stufe des Verdichters zugeführt.

Die JP 2002-317770 offenbart ein System, bei dem mehrere Kompressoren und Blasmaschinen selektiv mit einander verbunden werden können, um die jeweils verwendeten Blasmaschinen möglichst bedarfsgerecht mit Druckluft zu versorgen.

Es ist deshalb Aufgabe der vorliegenden Erfindung, ein Verfahren und eine Vorrichtung bereitzustellen, mit dem, bzw. mit der es möglich ist, in einfacher Weise eine Produktionsumstellung in Hohlkörperherstellungseinheiten vorzunehmen. Zudem ist es Aufgabe der Erfindung, ein effizienteres und einfacheres Hohlkörperherstellungsverfahren bzw. eine einfachere und effizientere Vorrichtung bereitzustellen.

Bezüglich des Verfahrens wird diese Aufgabe gelöst durch die Merkmale des Anspruchs 6.

Dazu wird mit einer Steuereinheit sowohl ein Kompressor, als auch eine Hohlkörperherstellungsmaschine in einer Hohlkörperherstellungseinheit gesteuert. Zum Datenaustausch wird die Steuereinheit sowohl mit der Streckblasmaschine als auch mit dem Kompressor verbunden. Eine Hohlkörperherstellungsmaschine kann sowohl eine Glasflaschen- als auch eine Plastikbehälter herstellende Maschine sein. Vorzugsweise handelt es sich um Maschinen zum Herstellen für PET-Behälter, insbesondere für PET-Flaschen, wobei die Maschine gemäß einer bevorzugten Weiterbildung der Erfindung eine Rundläuferstreckblasmaschine ist. Ein Geradläufer ist selbstverständlich auch denkbar.

Die Hohlkörperherstellungseinheit besteht vorzugsweise aus einem Kompressor, aus einer Streckblasmaschine sowie aus einer Steuereinheit, die sowohl mit der Streckblasmaschine als auch mit dem Kompressor verbunden ist. Es liegt auch im Bereich der Erfindung, dass mehrere Streckblasmaschinen mit einem Kompressor, mehrere Kompressoren mit einer Streckblasmaschine sowie mehrere Streckblasmaschinen mit mehreren Kompressoren verbunden sind. Alle diese Varianten haben die Gemeinsamkeit, dass sie von einer gemeinsamen zentralen Steuereinheit gesteuert und/oder geregelt werden.

Es spielt keine Rolle, wo sich die Steuereinheit befindet. Eine Unterbringung an bzw. in der Streckblasmaschine ist genauso möglich wie die Unterbringung an bzw. im Kompressor oder in einem eigenen Schaltschrank.

In einer Streckblasmaschine werden Vorformlinge in der Regel kurz vor der Verarbeitung aufgewärmt, um dann in eine Blasform eingeführt zu werden, in der sie mit unter Druck stehender Blasluft in einem ersten Schritt vor- und in einem zweiten Schritt fertiggeblasen werden. Gemäß einer bevorzugten Weiterbildung der Erfindung wird die Blasluft aus dem fertig geblasenen Behälter zum Kompressor zurückgeführt. Erfindungsgemäß wird ein mehrstufiger Kompressor verwendet, wobei der rückgeführte Luftstrom zwischen zwei Kompressorstufen eingeschleust wird. Bei der Verwendung von Kompressoren ist es völlig irrelevant, welche Art verwendet wird. Hubkolbenkompressoren sind dabei genauso einsetzbar wie Schraubenverdichter, Roots-Gebläse, Kombinationen davon oder wie die Verwendung weiterer anderer Typen.

Auch die Rückführung der Blasluft in einen Zwischenspeicher und von dort aus zurück in den Kompressor ist möglich, um bestimmt ungewollte Druckschwankungen auszugleichen. Bei der Verwendung des Verfahrens ist es irrelevant, ob die gesamte Blasluft aus dem Blasprozess oder nur ein Teil rückgeführt wird.

Gemäß der Erfindung wird die Rückführung der Blasluft zum Kompressor von der Steuereinheit gesteuert. Diese erfolgt vorzugsweise in Abhängigkeit von der Betriebssituation der Streckblasmaschine. Dies bedeutet, dass die Steuereinheit z.B. je nach Druckniveau in den geblasenen Behältern verschieden lange Rückführzeiten vorgibt. Dies hat den Vorteil, dass die Steuereinheit dadurch den Mittelweg zwischen optimaler Luftrückführung und optimaler Prozesszeit beschreiten kann. Unter Betriebssituation ist auch die Menge der zur Verfügung stehenden Blasluft im fertig geblasenen Behälter zu verstehen. Dadurch ergibt sich z.B. die Konstellation, dass die Steuerung trotz der Vorgabe des Maschinenbedienpersonals, dass eine Rückführung der Blasluft zum Kompressor gewünscht wird, keine Rückführung durchgeführt wird, wenn z.B. das Volumen der fertig geblasenen Behälter unter einem bestimmten Schwellenwert liegt.

Gemäß einer weiteren Weiterbildung der Erfindung wird die Steuerung des Kompressors durch die Eingabe von Parametern in die Steuereinheit, die den Kompressor betreffen, durchgeführt. Eine direkte Steuerung des Kompressors über die Steuereinheit ist also möglich.

Vorzugsweise wird der Kompressor aber nicht direkt sondern indirekt gesteuert. Dazu werden über die Steuereinheit die Streckblasmaschine betreffende Parameter eingegeben, die dementsprechende, den Kompressor betreffende Programme oder Programmteile aufrufen. Solche Parameter, die indirekt die Steuerung des Kompressors vornehmen, können z.B. der Vorblasdruck, der Fertigblasdruck, die Produktionsleistung der Streckblasmaschine, das Behältervolumen oder die Bereitschaft zur Luftrückführung zum Kompressor sein. D.h., dass z.B. durch die Eingabe eines Wertes für den Fertigblasdruck im Behälter in der Steuerung ein Programm aufgerufen wird, das dem Kompressor eine bestimmte bereitzustellende Soll-Leistung vorgibt. Es können beliebige Werte sein, die über die Steuereinheit an die Blasmaschine weitergegeben werden, und dadurch bestimmte Einstellungen bzw. Kriterien an den Kompressor weitergeben.

Gemäß einer weiteren bevorzugten Weiterbildung der Erfindung wird die Ist-Leistung des Kompressors durch die Verarbeitung von Messwerten durch die Steuereinheit geregelt. Ein solcher Messwert kann z.B. der Druck in der Rückführleitung von einer Blasstation zum Kompressor sein. Dadurch kann die Leistung des Kompressors noch genauer an die wahren Leistungsverhältnisse der Streckblasmaschine angepasst werden. Durch eine gemeinsame Steuerung ist es also möglich, einen Blasmaschine und einen Kompressor (oder auch mehrere Blasmaschinen bzw. mehrere Kompressoren) und deren angeschlossene Einheiten optimal in der Weise aufeinander abzustimmen, dass der Blasmedien- bzw. der Energieverbrauch optimiert wird.

Vor allem bei Ausführungsformen mit mehreren Kompressoren bzw. mehreren Blasmaschinen ist es sinnvoll, die einzelnen Einheiten nicht mit der zentralen Steuereinheit zu verkabeln, sondern einen drahtlosen Datenaustausch aufzubauen. Eine solche drahtlose Kommunikation kann z. B. durch die Verwendung des bluetooth Standards, von Infrarot, von Mikrowellen oder anderen elektromagnetischen Wellen sein.

Es versteht sich von selbst, dass die Hohlkörperherstellungseinheit nicht nur aus einer Blasmaschine, einem Kompressor und einer Steuereinheit bestehen, sondern dass eine solche Einheit auch andere Komponenten wie Sensoren, Förderstrecken, Ventile und weitere enthalten kann.

Gemäß einer bevorzugten Weiterbildung der Erfindung ist die Steuereinheit eine speicherprogrammierbare Steuerung (SPS).

Die Aufgabe bezüglich der Vorrichtung wird gelöst durch die Merkmale des Anspruchs 1. Dazu ist eine Steuerung zum Datenaustausch sowohl mit der Streckblasmaschine als auch mit dem Kompressor verbunden.

Erfindungsgemäß weist die Hohlkörperherstellungsmaschine eine pneumatische Rückführleitung auf, die zum Kompressor führt. Erfindungsgemäß mündet die Rückführleitung zwischen zwei Kompressorstufen ein. Weitere Ausführungsformen, die nicht Teil der Erfindung formen, sind, dass die Rückführleitung direkt in den Kompressor, vor dem Kompressor, also in dessen Luftansaugbereich oder nach dem Kompressor, also in dessen Druckluftabgabebereich mündet. Erfindungsgemäß handelt es sich bei der Hohlkörperherstellungsmaschine um eine Streckblasmaschine für Kunststoffflaschen, insbesondere für PET-Flaschen, wobei eine Streckblasmaschine umlaufender Bauart bevorzugt Verwendung findet.

Weiterhin besteht eine Weiterbildung der Erfindung darin, dass sich die zentrale Steuereinheit in der Blasmaschine befindet, wobei eine Unterbringung im Kompressor ebenfalls denkbar ist. Die Steuereinheit besitzt ein Eingabegerät, über das Parameter eingegeben und Einstellungen vorgenommen werden können. Das Eingabegerät ist gemäß einer weiteren Weiterbildung der Erfindung ein Touch-Screen. Andere Eingabegeräte, wie Schalter, Taster oder anderweitige Tastaturen sind auch möglich.

Eine weitere bevorzugte Weiterbildung der Erfindung besteht darin, dass sich die Steuereinheit in der Blasmaschine und das Eingabegerät an der Blasmaschine befindet. Eine Unterbringung der Steuereinheit in einem eigenen Schaltschrank oder die Unterbringung im Kompressor ist alternativ auch möglich.

Der bzw. die Kompressoren, die Steuereinheit sowie die eine bzw. die mehreren Blasmaschinen sind vorzugsweise mit Modulen zum drahtlosen Datenaustausch ausgestattet, wobei die Module z.B. bluetooth, Infrarot, Mikrowellen oder andere elektromagnetische Sende- bzw. Empfangseinheiten sein können.

Eine konkrete Ausgestaltung der Erfindung soll anhand der Figuren näher erläutert werden. Es zeigt:

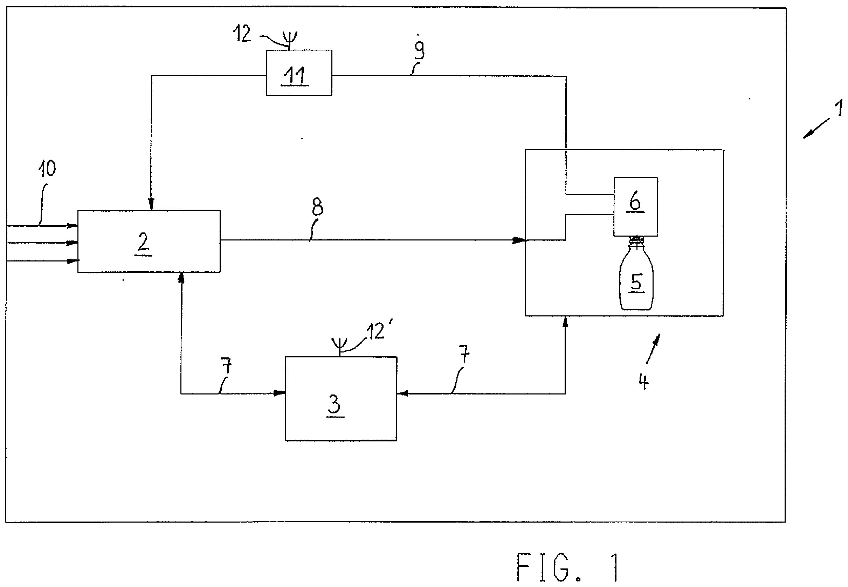

- Figur 1: eine schematische Darstellung einer Einheit mit Blasmaschine, Kompressor und Steuereinheit.

Figur 1 zeigt einen Kompressor 2, der über eine Luftzufuhr 8 und eine Luftrückführung 9 mit einer Blasmaschine 4 gekoppelt ist. Der Kompressor 2 besitzt eine Luftansaugung 10 über die gefilterte Frischluft angesaugt und verdichtet wird. Die komprimierte Luft wird über die Luftzufuhr 8 der Blasmaschine 4 zugeführt, wobei die Zufuhr über einen hier nicht gezeigten Ringkanal und eine Blasdüse 6 zum Behälter 5 erfolgt. Dieser wird durch mindestens zwei Blasphasen, nämlich eine Vorblasphase und eine Hauptblasphase von einem Rohling zum fertigen Behälter 5 aufgeblasen. Ist der Behälter 5 fertig geblasen, so kann die Blasluft aus dem Behälter über die Blasdüse 6 und der Luftrückführung 9 dem Kompressor 2 erneut zugeführt werden.

Die Steuerung der genannten Vorgänge übernimmt eine Steuereinheit 3, die über eine bidirektionale Signalübertragung 7 mit der Blasmaschine 4 sowie dem Kompressor 2 verbunden ist. Dadurch können über die Steuereinheit 3 alle Funktionen der angeschlossenen Maschinen abgerufen, überprüft und verändert werden.

Die Luftrückführung 9 ist mit einem Drucksensor 11 ausgestattet, der die Druckverhältnisse der zurückzuführenden Blasluft aus dem Behälter 5 überwacht. Diese Daten werden über eine Sende-/Empfangseinheit 12 vom Drucksensor 11 an die Sende-/Empfangseinheit 12 der Steuereinheit 3 drahtlos gesendet. Mit Hilfe dieses und anderer Ergebnisse kann die Steuereinheit 3 den Kompressor 2 optimal regeln, um den Energieverbrauch der gesamten Hohlkörperherstellungseinheit 1 zu optimieren bzw. reduzieren. Eine Möglichkeit der Steuerung und Regelung des Kompressors 2 ist die der Leistungssteuerung und Leistungsregelung.

## Patentansprüche

1. Vorrichtung zum Herstellen von Hohlkörpern bestehend aus zumindest einem mehrstufigen Kompressor (2), zumindest einer Hohlkörperherstellungsmaschine und zumindest einer Steuerung (3), wobei die Hohlkörperherstellungsmaschine über eine Rückführleitung (9) pneumatisch mit dem Kompressor (2) verbunden ist, **dadurch gekennzeichnet dass** die Hohlkörperherstellungsmaschine eine Streckblasmaschine (4) für Kunststoffflaschen (5) ist, die mittels der Rückführleitung (9) rückgeführte Blasluft zwischen zwei Kompressorstufen einführbar ist, die Steuerung (3) zum Datenaustausch sowohl mit der Streckblasmaschine (4) als auch mit dem Kompressor (2) verbunden ist, und die Rückführung der Blasluft zum Kompressor (2) von der Steuerung (3) steuerbar ist.

2. Vorrichtung nach Anspruch 1, **dadurch gekennzeichnet, dass** die Streckblasmaschine (4) zur Herstellung von PET-Flaschen (5) ausgebildet ist.

3. Vorrichtung nach Anspruch 1 oder 2, **dadurch gekennzeichnet, dass** die Streckblasmaschine (4) eine Maschine umlaufender Bauart ist.

4. Vorrichtung nach wenigstens einem der vorigen Ansprüche, wobei mehrere Streckblasmaschinen (4) mit einem Kompressor (2), mehrere Kompressoren (2) mit einer Streckblasmaschine (4) oder mehrere Streckblasmaschinen (4) mit mehreren Kompressoren (2)verbunden sind, die jeweils mittels einer gemeinsamen zentralen Steuereinheit (3) gesteuert und/oder geregelt sind.

5. Vorrichtung nach wenigstens einem der vorigen Ansprüche, wobei der Kompressor (2) über eine Luftzufuhr (8) und eine Luftrückführung (9) mit einer Blasmaschine (4) gekoppelt ist und eine Luftansaugung (10) zum Ansaugen und Verdichten gefilterte Frischluft sowie eine Luftzufuhr (8) zum Zuführen komprimierter Luft zur Blasmaschine (4) aufweist, insbesondere zur Zufuhr der komprimierten Luft über einen Ringkanal und eine Blasdüse (6) zum Behälter (5).

6. Verfahren zur Steuerung und Regelung einer Hohlkörperherstellungseinheit (1), aufweisend mindestens einen mehrstufigen Kompressor (2), mindestens eine Streckblasmaschine (4) für Kunststoffflaschen (5) und mindestens eine Steuereinheit (3), wobei die Steuereinheit (3) zum Datenaustausch sowohl mit der Streckblasmaschine (4) als auch mit dem Kompressor (2) verbunden wird, wobei Blasluft von der Hohlkörperherstellungsmaschine (4) zum Kompressor (2) rückgeführt wird, wobei die rückgeführte Blasluft zwischen zwei Kompressorstufen des Kompressors (2) eingeführt wird, und wobei die Rückführung der Blasluft zum Kompressor (2) von der Steuereinheit (3) gesteuert wird.

7. Verfahren nach Anspruch 6, wobei die Rückführung der Blasluft zum Kompressor (2) von der Steuereinheit (3) in Abhängig von der Betriebssituation der Hohlkörperherstellungsmaschine (4) gesteuert wird.

8. Verfahren nach Anspruch 6, wobei die Rückführung der Blasluft zum Kompressor (2) von der Steuereinheit (3) in Abhängigkeit von der Menge der zur Verfügung stehenden Blasluft im fertig geblasenen Hohlkörper (5) gesteuert wird.

9. Verfahren nach wenigstens einem der Ansprüche 6 bis 8, wobei die Blasluft in einen Zwischenspeicher und von dort aus zurück in den Kompressor (2) geführt wird.

10. Verfahren nach wenigstens einem der Ansprüche 6 bis 9, wobei der Behälter (5) durch mindestens zwei Blasphasen, insbesondere durch eine Vorblasphase und eine Hauptblasphase, von einem Rohling zum fertigen Behälter (5) aufgeblasen wird, und wobei aus dem fertig geblasenen Behälter (5) Blasluft über eine Blasdüse (6) und eine Luftrückführung (9) dem Kompressor (2) erneut zugeführt wird.

## Claims

1. Device for manufacturing hollow bodies, comprising at least one multistage compressor (2), at least one hollow body manufacturing machine, and at least one control unit (3), wherein the hollow body manufacturing machine is pneumatically connected to the compressor (2) by a recirculation line (9), **characterized in that** the hollow body manufacturing machine is a stretch blow molding machine (4) for plastic bottles (5), the blow molding air recirculated by the recirculation line (9) is introducible between two compressor stages, the control unit (3) for data exchange is connected to both the stretch blow molding machine (4) and the compressor (2), and the recirculation of the blow molding air to the compressor (2) is controllable by the control unit (3).

2. Device according to claim 1, **characterized in that** the stretch blow molding machine (4) is configured to produce PET bottles (5).

3. Device according to claim 1 or 2, **characterized in that** the stretch blow molding machine (4) is a machine of a revolving type.

4. Device according to at least one of the preceding claims, wherein plural stretch blow molding machines (4) are connected to a compressor (2), plural compressors (2) to a stretch blow molding machine (4), or plural stretch blow molding machines (4) to plural compressors (2), which are each controlled and/or regulated by a common central control unit (3).

5. Device according to at least one of the preceding claims, wherein the compressor (2) is coupled with a blow molding machine (4) via an air supply (8) and an air recirculation (9), and comprises an air intake (10) for the intake and compression of filtered fresh air and an air supply (8) for the supply of compressed air to the blow molding machine (4), in particular for the supply of the compressed air via a ring duct and a blowing jet (6) to the container (5).

6. Method for controlling and regulating a hollow body manufacturing unit (1), comprising at least one multistage compressor (2), at least one stretch blow molding machine (4) for plastic bottles (5) and at least one control unit (3), wherein the control unit (3) for data exchange is connected to both the stretch blow molding machine (4) and the compressor (2), wherein blow molding air is recirculated from the hollow body manufacturing machine (4) to the compressor (2), wherein the recirculated blow molding air is introduced between two compressor stages of the compressor (2), and wherein the recirculation of the blow molding air to the compressor (2) is controlled by the control unit (3).

7. Method according to claim 6, wherein the recirculation of the blow molding air to the compressor (2) is controlled by the control unit (3) as a function of an operating situation of the hollow body manufacturing machine (4).

8. Method according to claim 6, wherein the recirculation of the blow molding air to the compressor (2) is controlled by the control unit (3) as a function of an amount of blow molding air available in the completely blow molded hollow body (5).

9. Method according to at least one of claims 6 to 8, wherein the blow molding air is recirculated into an intermediate storage and from there back into the compressor (2).

10. Method according to at least one of claims 6 to 9, wherein the container (5) is inflated by way of at least two blow phases, particularly by a pre-blowing phase and a main blow molding phase, from a parison into the finished container (5), and wherein from the finished blow molded container (5) blow molding air is again supplied via a blowing jet (6) and an air recirculation (9) to the compressor (2).

## Revendications

1. Dispositif de fabrication de corps creux, constitué d'au moins un compresseur (2) à étages multiples, d'au moins une machine de fabrication de corps creux et d'au moins une commande (3), la machine de fabrication de corps creux étant reliée de manière pneumatique au compresseur (2) par l'intermédiaire d'une conduite de retour (9),
**caractérisé en ce que** la machine de fabrication de corps creux est une machine d'étirage-soufflage (4) pour des bouteilles en matière plastique (5), l'air de soufflage ramené au moyen de la conduite de retour (9) peut être introduit entre deux étages de compresseur, la commande (3) est, pour l'échange de données, reliée aussi bien à la machine d'étirage-soufflage (4) qu'au compresseur (2), et le retour de l'air de soufflage vers le compresseur (2) peut être commandé par la commande (3).

2. Dispositif selon la revendication 1, **caractérisé en ce que** la machine d'étirage-soufflage (4) est conçue pour la fabrication de bouteilles en PET (5).

3. Dispositif selon la revendication 1 ou la revendication 2, **caractérisé en ce que** la machine d'étirage-soufflage (4) est une machine du type machine à révolution.

4. Dispositif selon l'une au moins des revendications précédentes, dans lequel plusieurs machines d'étirage-soufflage (4) sont reliées à un compresseur (2), plusieurs compresseurs (2) sont reliés à une machine d'étirage-soufflage (4), ou bien plusieurs machines d'étirage-soufflage (4) sont reliées à plusieurs compresseurs (2), qui sont respectivement commandés et/ou régulés chacun au moyen d'une unité de commande centrale (3) commune.

5. Dispositif selon l'une au moins des revendications précédentes, dans lequel le compresseur (2) est couplé à une machine de moulage par soufflage (4) par l'intermédiaire d'une amenée d'air (8) et d'un retour d'air (9), et présente une aspiration d'air (10) pour aspirer et comprimer de l'air frais filtré, ainsi qu'une amenée d'air (8) pour amener de l'air comprimé à la machine de moulage par soufflage (4), notamment pour amener de l'air comprimé au contenant (5) par l'intermédiaire d'un canal annulaire et d'une buse de soufflage (6).

6. Procédé pour commander et réguler une unité de fabrication de corps creux (1), présentant au moins un compresseur (2) à étages multiples, au moins une machine d'étirage-soufflage (4) pour des bouteilles en matière plastique (5), et au moins une unité de commande (3), procédé
d'après lequel on relie l'unité de commande (3), pour l'échange de données, aussi bien à la machine d'étirage-soufflage (4) qu'au compresseur (2),
d'après lequel on ramène de l'air de soufflage de la machine de fabrication de corps creux (4) au compresseur (2),
d'après lequel on introduit l'air de soufflage ramené, entre deux étages de compression du compresseur (2),
et d'après lequel l'unité de commande (3) assure la commande du retour de l'air de soufflage au compresseur (2).

7. Procédé selon la revendication 6, d'après lequel le retour de l'air de soufflage au compresseur (2) est commandé par l'unité de commande (3), en fonction de la situation de fonctionnement de la machine de fabrication de corps creux (4).

8. Procédé selon la revendication 6, d'après lequel le retour de l'air de soufflage au compresseur (2) est commandé par l'unité de commande (3), en fonction de la quantité de l'air de soufflage à disposition dans le corps creux (5) dont le moulage par soufflage est achevé.

9. Procédé selon l'une au moins des revendications 6 à 8, d'après lequel l'air de soufflage est acheminé dans un réservoir de stockage intermédiaire, et de là en retour dans le compresseur (2).

10. Procédé selon l'une au moins des revendications 6 à 9, d'après lequel le contenant (5) est moulé par soufflage, à partir d'une ébauche jusqu'à obtenir un contenant (5) fini, par au moins deux phases de soufflage, notamment par une phase de pré-soufflage et une phase de soufflage principale, et d'après lequel on ramène à nouveau au compresseur (2), de l'air de soufflage en provenance du contenant (5) dont le moulage par soufflage est achevé, par l'intermédiaire d'une buse de soufflage (6) et d'un retour d'air (9).
